# EUROPEAN PATENT SPECIFICATION

(11) **EP 4 634 620 B1**
(45) Date of publication and mention of the grant of the patent: **18.11.2026**
(21) Application number: 23825173.0
(22) Date of filing: 22.11.2023
(51) Int. Cl.: G01D 5/353

(54) **METHODS OF PROCESSING OPTICAL DATA GENERATED BY A DISTRIBUTED FIBER OPTIC SENSING SYSTEM THAT EXTENDS PROXIMATE HYDROCARBON INDUSTRIAL INFRASTRUCTURE, AND HYDROCARBON INDUSTRIAL INFRASTRUCTURE THAT PERFORMS THE METHODS**
VERFAHREN ZUR VERARBEITUNG OPTISCHER DATEN, DIE VON EINEM VERTEILTEN GLASFASERSENSORSYSTEM ERZEUGT WERDEN, DAS SICH AN DIE NAHELIEGENDE INDUSTRIELLE INFRASTRUKTUR DER KOHLENWASSERSTOFFINDUSTRIE ANSCHLIESST, SOWIE INDUSTRIELLE INFRASTRUKTUR DER KOHLENWASSERSTOFFINDUSTRIE, DIE DIESE VERFAHREN DURCHFÜHRT
PROCÉDÉS DE TRAITEMENT DE DONNÉES OPTIQUES GÉNÉRÉES PAR UN SYSTÈME DE DÉTECTION À FIBRES OPTIQUES DISTRIBUÉ S'ÉTENDANT À PROXIMITÉ D'UNE INFRASTRUCTURE INDUSTRIELLE POUR HYDROCARBURES, ET INFRASTRUCTURE INDUSTRIELLE POUR HYDROCARBURES METTANT EN OUVRE LESDITS PROCÉDÉS

(30) Priority: 16.12.2022 US 202263387776 P
(43) Date of publication of application: 22.10.2025
(73) Proprietor: ExxonMobil Technology and Engineering Company, Spring, TX 77389 (US)
(72) Inventor: SEABROOK, Brian C., Houston, Texas 77008 (US); CAMPBELL, Bryce K., The Woodlands, Texas 77382 (US); ADAIR, Neal L., Spring, Texas 77386 (US)
(74) Representative: Abel & Imray LLP
(86) International application number: PCT/US2023/080844
(87) International publication number: WO 2024/129326

(56) References cited:
- US-A1- 2016 252 651
- US-A1- 2017 045 410
- US-A1- 2017 074 688
- US-A1- 2022 372 852

## Description

### Cross-Reference to Related Application

This application claims the benefit of U.S. Provisional Application Serial No 63/387,776, entitled "METHODS OF PROCESSING OPTICAL DATA GENERATED BY A DISTRIBUTED FIBER OPTIC SENSING SYSTEM THAT EXTENDS PROXIMATE HYDROCARBON INDUSTRIAL INFRASTRUCTURE, AND HYDROCARBON INDUSTRIAL INFRASTRUCTURE THAT PERFORMS THE METHODS," filed December 16, 2022.

### Field of the Disclosure

The present disclosure relates generally to methods of processing optical data generated by a distributed fiber optic sensing system that extends proximate hydrocarbon industrial infrastructure, and to hydrocarbon industrial infrastructure that performs the methods.

### Background of the Disclosure

Distributed fiber optic sensing systems may utilize a fiber optic cable to monitor a local environment of the fiber optic cable as a function of position along a length of the fiber optic cable. As an example, a fiber optic cable of a distributed fiber optic sensing system may be positioned proximate, or attached to, hydrocarbon industrial infrastructure and may be utilized to generate optical data that provides information regarding conditions within and/or proximate the hydrocarbon industrial infrastructure.

Distributed fiber optic sensing systems may be highly effective in that they may provide high resolution spatial-temporal sampling along the length of the fiber optic cable. However, the distributed fiber optic sensing systems also may generate extremely large volumes of data, and it may be technologically challenging and/or expensive to store, transmit, and/or analyze such large volumes of data. This may be especially true for distributed fiber optic sensing systems that are associated with hydrocarbon industrial infrastructure located in remote and/or inaccessible regions, with distributed fiber optic sensing systems associated with hydrocarbon industrial infrastructure located in regions where high bandwidth communication systems are not readily available, and/or with distributed fiber optic sensing systems that utilize especially long fiber optic cables. Thus, the optical data generated by such distributed fiber optic sensing systems may not be utilized to its full potential and/or only may be analyzed in retrospect.

Methodologies for compressing the optical data have been proposed. However, these methodologies generally are a one size fits all approach that often may ignore useful information and/or may be incapable of taking full advantage of the high resolution spatial-temporal sampling provided by distributed fiber optic sensing systems. Thus, there exists a need for improved methods of processing optical data generated by a distributed fiber optic sensing system that extends proximate hydrocarbon industrial infrastructure and/or to improved hydrocarbon industrial infrastructure that performs the methods.

### Summary of the Disclosure

Methods of processing optical data generated by a distributed fiber optic sensing system, which includes a fiber optic cable that extends proximate hydrocarbon industrial infrastructure, and hydrocarbon industrial infrastructure that performs the methods are disclosed herein. The methods include repeatedly providing an input optical signal to the fiber optic cable and repeatedly receiving an output optical signal from the fiber optic cable. The repeatedly receiving is responsive to the repeatedly providing, and the output optical signal includes optical data regarding a local environment of the fiber optic cable as a function of position along a length of the fiber optic cable. The methods also include generating an output data stream that is based upon the output optical signal. The methods further include downsampling the output data stream utilizing a predetermined decimation algorithm to generate a decimated output data stream. The methods also include comparing the decimated output data stream to a reference decimated output data stream. The methods further include detecting anomalous behavior by determining that a subset of the optical data within the decimated output data stream differs from a corresponding subset of the optical data within the reference decimated output data. Responsive to the determining, the methods also include analyzing the subset of the optical data.

### Brief Description of the Drawings

**FIG. 1** is a schematic illustration of examples of hydrocarbon industrial infrastructure that may perform methods, according to the present disclosure.
**FIG. 2** is a flowchart illustrating examples of methods of processing optical data, according to the present disclosure.
**FIG. 3** is an illustration of an example of optical data that may be generated by and/or included with methods, according to the present disclosure.
**FIG. 4** is an illustration of uniform sampling of the optical data illustrated in **FIG. 3** in both a spatial dimension and a temporal dimension.
**FIG. 5** is an illustration of downsampling the optical data illustrated in **FIG. 3** in the spatial dimension.
**FIG. 6** is an illustration of signal amplitude as a function of the spatial dimension for the downsampling illustrated in **FIG. 5****.**
**FIG. 7** is an illustration of downsampling the optical data illustrated in **FIG. 3** in the temporal dimension.
**FIG. 8** is an illustration of signal amplitude as a function of the temporal dimension for the downsampling illustrated in **FIG. 7****.**
**FIG. 9** is an illustration of downsampling the optical data illustrated in **FIG. 3** in a spectral dimension.
**FIG. 10** is an illustration of spectral amplitude as a function of normalized frequency for the downsampling illustrated in **FIG. 9****.**

### Detailed Description and Best Mode of the Disclosure

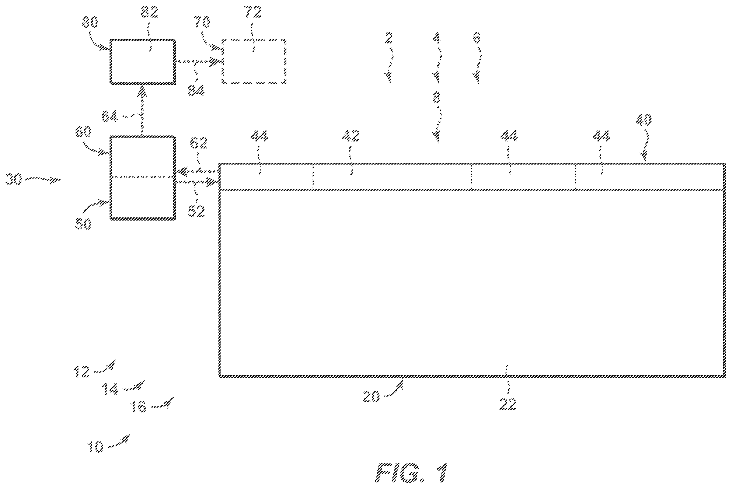

**FIGs. 1-10** provide examples of hydrocarbon industrial infrastructure 10 and/or of methods 100, according to the present disclosure. Elements that serve a similar, or at least substantially similar, purpose are labeled with like numbers in each of **FIGs. 1-10****,** and these elements may not be discussed in detail herein with reference to each of **FIGs. 1-10****.** Similarly, all elements may not be labeled in each of **FIGs. 1-10****,** but reference numerals associated therewith may be utilized herein for consistency. Elements, components, and/or features that are discussed herein with reference to one or more of **FIGs. 1-10** may be included in and/or utilized with any of **FIGs. 1-10** without departing from the scope of the present disclosure.

In general, elements that are likely to be included in a particular embodiment are illustrated in solid lines, while elements that are optional are illustrated in dashed lines. However, elements that are shown in solid lines may not be essential to all embodiments and, in some embodiments, may be omitted without departing from the scope of the present disclosure.

**FIG. 1** is a schematic illustration of examples of hydrocarbon industrial infrastructure 10, which also may be referred to herein as hydrocarbon infrastructure 10 and/or as infrastructure 10, according to the present disclosure. Infrastructure 10 includes a containment structure 20, a distributed fiber optic sensing system 30, and a controller 80.

Containment structure 20 may include, contain, house, and/or convey a hydrocarbon 22, examples of which include a hydrocarbon fluid, a hydrocarbon liquid, a hydrocarbon gas, oil, crude oil, and/or natural gas. Additionally, or alternatively, containment structure 20 may include, contain, house, and/or convey one or more materials that may be associated with and/or utilized during production, processing, and/or utilization of hydrocarbons, examples of which include water, sand, hydrates, gasses, carbon dioxide, non-hydrocarbon gasses, solids, and/or slurries.

Distributed fiber optic sensing system 30 may include a fiber optic cable 40, which may extend proximate, may extend in contact with, and/or may be operatively attached to containment structure 20. Distributed fiber optic sensing system 30 also may include an input signal source 50, which may be configured to provide an input optical signal 52 to fiber optic cable 40, and an output signal receiver 60, which may be configured to receive an output optical signal 62 from fiber optic cable 40 and/or to generate an output data stream 64. Controller 80 may be configured to receive output data stream 64.

During operation of hydrocarbon industrial infrastructure 10, and as discussed in more detail herein, input signal source 50 may, or may be utilized to, provide input optical signal 52 to fiber optic cable 40. Input optical signal 52 may be reflected at a plurality of spaced-apart locations along a length of fiber optic cable 40 and may return to output signal receiver 60 as output optical signal 62, which may include optical data regarding a local environment 8 of fiber optic cable 40 as a function of position along the length of the fiber optic cable. Because of the proximity and/or attachment between fiber optic cable 40 and hydrocarbon industrial infrastructure 10, this optical data may include optical data regarding hydrocarbon industrial infrastructure 10, regarding containment structure 20, and/or regarding hydrocarbon 22 that is positioned and/or flows within the containment structure.

Controller 80 may receive output data stream 64 from output signal receiver 60 and may process the output data stream according to methods 100, which are discussed in more detail herein. This may include downsampling output data stream 64 utilizing a predetermined decimation algorithm to generate a decimated output data stream 84 and comparing the decimated output data stream to a reference decimated output data stream. This also may include detecting anomalous behavior by determining that a subset of the optical data within the decimated output data stream differs from a corresponding subset of the optical data within the reference decimated output data and, responsive to the determining, analyzing the subset of the optical data. Stated differently, controller 80 may compare the decimated output data stream to the reference decimated output data and may determine that the decimated output data stream differs from the reference decimated output data; and this determination may initiate additional analysis of the subset of the optical data.

In a specific example, fiber optic cable 40 of distributed fiber optic sensing system 30 may extend for several thousand meters along the length of containment structure 20, which also may extend for several thousand meters. As such, distributed fiber optic sensing system 30 may permit and/or facilitate monitoring over large distances. In addition, output optical signal 62 may provide optical data regarding the local environment of fiber optic cable 40 at a temporal resolution that is in the kilohertz range and at a spatial resolution that is on the order of one meter. As such, distributed fiber optic sensing system 30 may generate several terabytes of optical data each day. As discussed, it may be technologically challenging and/or expensive to transmit, store, and/or analyze such large volumes of optical data. As such, downsampling of output data stream 64 via the predetermined decimation algorithm and comparing the decimated output data stream to the reference decimated output data stream may permit and/or facilitate earlier, faster, and/or more economical detection of anomalous behavior in the optical data and/or by the hydrocarbon industrial infrastructure.

Hydrocarbon industrial infrastructure 10 may include any suitable structure that may include containment structure 20, distributed fiber optic sensing system 30, and/or controller 80. An example of hydrocarbon industrial infrastructure 10 includes a well 12, such as a hydrocarbon well, a production well, and/or an injection well. In such an example, fiber optic cable 40 may extend within and/or along a length of a wellbore of the well. Another example of hydrocarbon industrial infrastructure 10 includes a wellhead 14. Another example of hydrocarbon industrial infrastructure 10 includes a flow line 16, such as a pipeline, a process line, and/or another fluid conduit that may include and/or contain hydrocarbon 22. Another example of hydrocarbon industrial infrastructure 10 includes a tank, such as a process tank and/or a storage tank that may house and/or contain hydrocarbon 22.

It is within the scope of the present disclosure that fiber optic cable 40 may extend proximate hydrocarbon industrial infrastructure 10 and/or containment structure 20 thereof in any suitable manner. As an example, fiber optic cable 40 may be operatively attached to and/or may be positioned within the hydrocarbon industrial infrastructure and/or to the containment structure. As another example, the fiber optic cable may be operatively attached to and/or may be positioned within another structure that extends proximate, that supports, and/or that contains the hydrocarbon industrial infrastructure and/or the containment structure. As another example, the fiber optic cable may be wrapped around at least a portion and/or region of the hydrocarbon industrial infrastructure and/or the containment structure. Such a configuration may, or may be utilized to, increase a resolution, or a spatial resolution, of the distributed fiber optic sensing system.

Fiber optic cable 40 may include and/or be any suitable structure that may be adapted, configured, designed, and/or constructed to extend proximate containment structure 20, to receive input optical signal 52 from input signal source 50, and/or to provide output optical signal 62 to output signal receiver 60. Examples of fiber optic cable 40 include a glass fiber optical cable and/or a polymeric fiber optical cable.

Input signal source 50 may include any suitable structure that may be adapted, configured, designed, and/or constructed to provide input optical signal 52 to fiber optic cable 40. Examples of input signal source 50 include any suitable source of light and/or electromagnetic radiation, such as a light emitter, an electromagnetic radiation emitter, and/or a laser. Examples of the input optical signal include an input light signal and/or input electromagnetic radiation.

Output signal receiver 60 may include any suitable structure that may be adapted, configured, designed, and/or constructed to receive output optical signal 62 and/or to generate output data stream 64 from the output optical signal. Examples of output signal receiver 60 include an interferometer, an optical detector, and/or a digitizer. In a specific example, the interferometer may receive the output optical signal and may generate a continuous optical analog signal that is based upon the output optical signal. The continuous optical analog signal may be provided to an optical detector, which converts the continuous optical analog signal to a continuous electrical signal. The digitizer, which may form a portion of a computing device, may receive the continuous electrical signal, and convert the continuous electrical signal to a digitized data stream, which may comprise output data stream 64. Examples of the output optical signal include an output light signal and/or output electromagnetic radiation. Examples of the output data stream include an electronic output data stream, a digital output data stream, and/or an analog output data stream.

Controller 80 may include and/or be any suitable structure, device, and/or devices that may be adapted, configured, designed, constructed, and/or programmed to perform the functions discussed herein. As examples, controller 80 may include one or more of an electronic controller, a dedicated controller, a special-purpose controller, a personal computer, a special-purpose computer, a display device, a logic device, a memory device, and/or a memory device having computer-readable storage media.

The computer-readable storage media, when present, also may be referred to herein as non-transitory computer-readable storage media 82. This non-transitory computer-readable storage media may include, define, house, and/or store computer-executable instructions, programs, and/or code; and these computer-executable instructions may direct hydrocarbon industrial infrastructure 10 and/or controller 80 thereof to perform any suitable portion, or subset, of methods 100. Examples of such non-transitory computer-readable storage media include CD-ROMs, disks, hard drives, flash memory, etc. As used herein, storage, or memory, devices and/or media having computer-executable instructions, as well as computer-implemented methods and other methods according to the present disclosure, are considered to be within the scope of subject matter deemed patentable in accordance with Section 101 of Title 35 of the United States Code.

In some examples, and as illustrated in dashed lines in **FIG. 1****,** hydrocarbon industrial infrastructure 10 may include an electronic data storage device 70. Electronic data storage device 70, when present, may be configured to store decimated output data stream 84. In some such examples, electronic data storage device 70 may include data storage non-transitory computer-readable storage media 72, which may be configured to store the decimated output data stream.

It is within the scope of the present disclosure that hydrocarbon industrial infrastructure 10 may be positioned and/or utilized at any suitable location. As examples, at least a portion, a region, or even an entirety of hydrocarbon industrial infrastructure 10 may be positioned in, may extend within, and/or may be utilized within a surface region 2, a subsurface region 4, and/or a subsea region 6. In such examples, surface region 2, subsurface region 4, and/or subsea region 6 may at least partially define local environment 8 of fiber optic cable 40.

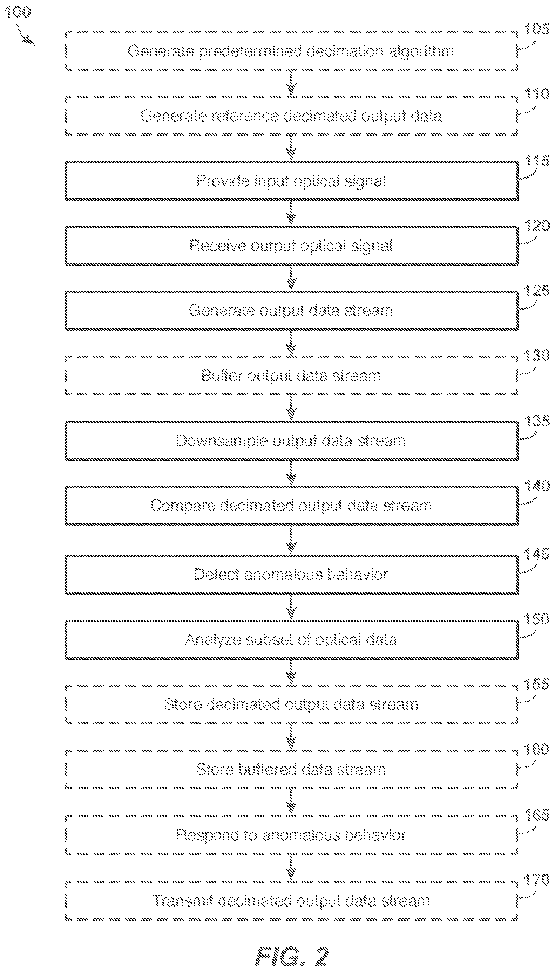

**FIG. 2** is a flowchart illustrating examples of methods 100 of processing optical data, according to the present disclosure. The optical data may be generated by a distributed fiber optic sensing system, which includes a fiber optic cable that extends proximate hydrocarbon industrial infrastructure. Examples of the distributed fiber optic sensing system are disclosed herein with reference to distributed fiber optic sensing system 30. Examples of the fiber optic cable are disclosed herein with reference to fiber optic cable 40. Examples of the hydrocarbon industrial infrastructure are disclosed herein with reference to hydrocarbon industrial infrastructure 10.

Methods 100 may include generating a predetermined decimation algorithm at 105 and/or generating reference decimated output data at 110. Methods 100 include providing an input optical signal at 115, receiving an output optical signal at 120, and generating an output data stream at 125. Methods 100 may include buffering the output data stream at 130, and methods 100 include downsampling the output data stream at 135, comparing a decimated output data stream at 140, detecting anomalous behavior at 145, and analyzing a subset of optical data at 150. Methods 100 further may include storing the decimated output data stream at 155, storing a buffered data stream at 160, responding to the anomalous behavior at 165, and/or transmitting the decimated output data stream at 170.

Generating the predetermined decimation algorithm at 105 may include producing and/or generating the predetermined decimation algorithm in any suitable manner. As an example, the generating at 105 may include adjusting a prior predetermined decimation algorithm, such as may be based upon changes, or observed changes, in the output data stream. As another example, the generating at 105 may include manually adjusting the predetermined decimation algorithm, such as by an operator of the hydrocarbon industrial infrastructure. As another example, the generating at 105 may include automatically adjusting the predetermined decimation algorithm, such as utilizing at least one computational methodology.

The predetermined decimation algorithm may specify how the downsampling at 135 may be performed for a plurality of distinct subsets of the optical data. As an example, the predetermined decimation algorithm may control and/or regulate the downsampling at 135, or a controller that performs the downsampling at 135, such that a given information resolution of a given subset of the optical data, which is generated by a given region of the fiber optic cable, differs from another information resolution of another subset of the optical data, which is generated by another region of the fiber optic cable. In addition, the predetermined decimation algorithm may specify a downsampling strategy for the given subset, may specify a downsampling strategy for the another subset, may specify the given information resolution, and/or may specify the another information resolution. Examples of downsampling performed via the predetermined decimation algorithm are disclosed herein.

The generating at 105 may be performed with any suitable timing and/or sequence during methods 100. As examples, the generating at 105 may be performed prior to, at least partially concurrently with, and/or subsequent to, the generating at 110, the providing at 115, the receiving at 120, the generating at 125, the buffering at 130, the downsampling at 135, the comparing at 140, the detecting at 145, the analyzing at 150, the storing at 155, the storing at 160, the responding at 165, and/or the transmitting at 170.

Generating the reference decimated output data at 110 may include producing and/or establishing any suitable reference decimated output data, such as may be compared to the decimated output data stream during the comparing at 140. An example of the reference decimated output data includes a reference decimated output data stream, such as may include a plurality of reference decimated output data values and corresponding times that may be associated with the plurality of reference decimated output data values. Another example of the reference decimated output data includes a plurality of average output data values, with each average output data value of the plurality of average output data values being associated with, or compared to during the comparing at 140, a corresponding subset of the decimated output data stream. Another example of the reference decimated output data includes a plurality of output data ranges, with each output data range of the plurality of output data ranges being associated with, or compared to during the comparing at 140, a corresponding subset of the decimated output data stream.

The generating at 110 may be performed in any suitable manner. As an example, the generating at 110 may include applying the predetermined decimation algorithm to a reference output data stream to produce and/or generate the reference decimated output data. As another example, the generating at 110 may include performing the providing at 115, the receiving at 120, and the generating at 125 for a reference time period to produce and/or generate the reference output data stream. Additionally, or alternatively, and in some examples, the generating at 105 may include generating the predetermined decimation algorithm based, at least in part, on the reference output data stream and/or on the reference decimated output data.

The generating at 110 may be performed with any suitable timing and/or sequence during methods 100. As examples, the generating at 110 may be performed prior to, at least partially concurrently with, and/or subsequent to, the generating at 105, the providing at 115, the receiving at 120, the generating at 125, the buffering at 130, the downsampling at 135, the comparing at 140, the detecting at 145, the analyzing at 150, the storing at 155, the storing at 160, the responding at 165, and/or the transmitting at 170. In a specific example, the generating at 110 may be performed prior to the downsampling at 135, such as to permit and/or facilitate the downsampling at 135. In another specific example, the generating at 110 may be performed subsequent and/or responsive to the detecting at 145, such as to adjust the predetermined decimation algorithm based upon the anomalous behavior and/or based upon a shift in the output data stream.

As discussed in more detail herein, the optical data may include a plurality of dimensions, such as a spatial dimension, a temporal dimension, and/or a spectral dimension. With this in mind, the generating at 110 may include generating the reference decimated output data such that the reference output data stream is decimated, or downsampled, in one or more of the plurality of dimensions.

As an example, the generating at 110 may include identifying, within the reference output data stream, a plurality of regions of steady-state spatial behavior. Each region of steady-state spatial behavior may be defined along a corresponding fraction of the length of the fiber optic cable. In such an example, the generating at 110 may include determining a corresponding region spatial resolution for each region of steady-state spatial behavior. The corresponding region spatial resolution may be sufficient to resolve variation within a subset of the output optical signal generated by the corresponding fraction of the length of the fiber optic cable. Also in such an example, the generating at 110 may include downsampling the corresponding subset of the reference output data stream to the corresponding region spatial resolution. The corresponding region spatial resolution may be, or may be selected to be, sufficient to resolve spatial variation within the output optical signal generated by the corresponding fraction of the length of the fiber optic cable. In addition, the corresponding region spatial resolution for at least one region of steady-state spatial behavior may differ from the corresponding region spatial resolution for at least one other region of steady-state spatial behavior.

When methods 100 include the generating at 110, the generating at 105 may include generating the predetermined decimation algorithm such that a resolution of the decimated output data stream as a function of position along the length of the fiber optic cable corresponds to a resolution of the reference decimated output data as a function of position along the length of the fiber optic cable. This may include generating the predetermined decimation algorithm based upon the reference decimated output data and/or generating the reference decimated output data utilizing the predetermined decimation algorithm.

As another example, the generating at 110 may include identifying, within the reference output data stream, a plurality of regions of steady-state temporal behavior. Each region of steady-state temporal behavior may be defined during a corresponding fraction of the reference time period. In such an example, the generating at 110 may include determining a corresponding region temporal resolution for each region of steady-state temporal behavior. The corresponding region temporal resolution may be sufficient to resolve variation within a subset of the output optical signal generated during the corresponding fraction of the reference time period. Also in such an example, the generating at 110 may include downsampling the corresponding subset of the reference output data stream to the corresponding region temporal resolution. The corresponding region temporal resolution may be, or may be selected to be, sufficient to resolve temporal variation within the output optical signal generated during the corresponding reference time. In addition, the corresponding region temporal resolution for at least one region of steady-state temporal behavior may differ from the corresponding region temporal resolution for at least one other region of steady-state temporal behavior.

When methods 100 include the generating at 110, the generating at 105 may include generating the predetermined decimation algorithm such that a resolution of the decimated output data stream as a function of time corresponds to a resolution of the reference decimated output data as a function of time, such that the resolution of the decimated output data stream as the function of time is greater than the resolution of the reference decimated output data as the function of time, and/or such that the resolution of the decimated output data stream as the function of time is less than the resolution of the referenced decimated output data as the function of time. This may include generating the predetermined decimation algorithm based upon the reference decimated output data and/or generating the reference decimated output data utilizing the predetermined decimation algorithm.

As another example, the generating at 110 may include identifying, within the reference output data stream, a plurality of regions of steady-state spectral behavior. Each region of steady-state spectral behavior may be defined during a corresponding fraction of the reference time period and/or along a corresponding fraction of the length of the fiber optic cable. In such an example, the generating at 110 may include determining a corresponding region spectral resolution for each region of steady-state spectral behavior. The corresponding region spectral resolution may be sufficient to resolve variation within a subset of the output optical signal that corresponds to each region of steady-state spectral behavior. Also in such an example, the generating at 110 may include downsampling the corresponding subset of the reference output data stream to the corresponding region spectral resolution. The corresponding region spectral resolution may be, or may be selected to be, sufficient to resolve spectral variation within the output optical signal within each region of steady-state spectral behavior. In addition, the corresponding region spectral resolution for at least one region of steady-state spectral behavior may differ from the corresponding region spectral resolution for at least one other region of steady-state spectral behavior.

When methods 100 include the generating at 110, the generating at 105 may include generating the predetermined decimation algorithm such that a spectral resolution of the decimated output data stream corresponds to a spectral resolution of the reference decimated output data. This may include generating the predetermined decimation algorithm based upon the reference decimated output data and/or generating the reference decimated output data utilizing the predetermined decimation algorithm.

Providing the input optical signal at 115 may include repeatedly providing the input optical signal to the fiber optic cable. This may include repeatedly providing the input optical signal on any suitable schedule and/or timeframe. As examples, the repeatedly providing at 115 may include continuously providing the input optical signal, periodically providing the input optical signal, such as on a fixed timeframe, intermittently providing the input optical signal, such as on a fixed, a predetermined, and/or a variable timeframe, and/or providing the input optical signal responsive to any suitable event and/or criteria. Examples of the input optical signal are disclosed herein with reference to input optical signal 52.

The providing at 115 may include repeatedly providing the input optical signal at an input signal supply frequency. The input signal supply frequency also may be referred to herein as a frequency at which the providing at 115 is performed and/or as a frequency at which the input optical signal is provided to the fiber optic cable. This may differ, or be distinct, from a spectral frequency, wavelength, wavenumber, and/or spectrum of the input optical signal itself. Examples of the input signal supply frequency include frequencies of at least 0.25 Kilohertz (kHz), at least 0.5 kHz, at least 0.75 kHz, at least 1 kHz, at least 2.5 kHz, at least 5 kHz, at least 10 kHz, at least 15 kHz, at least 20 kHz, at least 25 kHz, at least 30 kHz, at most 200 kHz, at most 150 kHz, at most 125 kHz, at most 100 kHz, at most 75 kHz, at most 50 kHz, at most 45 kHz, at most 40 kHz, at most 35 kHz, at most 30 kHz, at most 25 kHz, and/or at most 20 kHz.

The input optical signal may have and/or define an input optical spectrum, and the providing at 115 may include repeatedly providing the input optical signal with the input optical spectrum. The input optical spectrum may be fixed, or constant, for each instance of the providing at 115 or may vary among distinct instances of the providing at 115.

The providing at 115 may include repeatedly providing the input optical signal with, via, and/or utilizing an input signal source of the distributed fiber optic sensing system. Examples of the input signal source are disclosed herein with reference to input signal source 50.

The providing at 115 may be performed with any suitable timing and/or sequence during methods 100. As examples, the providing at 115 may be performed subsequent to the generating at 105 and/or to the generating at 110. As additional examples, the providing at 115 may be performed prior to and/or at least partially concurrently with the generating at 105, the generating at 110, the receiving at 120, the generating at 125, the buffering at 130, the downsampling at 135, the comparing at 140, the detecting at 145, the analyzing at 150, the storing at 155, the storing at 160, the responding at 165, and/or the transmitting at 170.

Receiving the output optical signal at 120 may include repeatedly receiving the output optical signal from the fiber optic cable. The receiving at 120 may be responsive to and/or a result of the providing at 115. As an example, and as discussed in more detail herein, the fiber optic cable may be configured to reflect the input optical signal back toward the output signal receiver as the output optical signal. Examples of the output optical signal are disclosed herein with reference to output optical signal 62.

The output optical signal may include optical data regarding a local environment of the fiber optic cable as a function of position along a length of the fiber optic cable. The optical data also may be referred to herein as distributed acoustic sensing (DAS) data, spatial data, spatial information, and/or spatially delineated data.

The output optical signal may have and/or define an output optical spectrum, and the receiving at 120 may include repeatedly receiving the output optical signal with the output optical spectrum. The output optical spectrum may differ from the input optical spectrum and/or may vary among instances of the repeatedly receiving at 120. As an example, the output optical spectrum may vary based upon and/or may be indicative of the local environment of the fiber optic cable. As such, the output optical signal and/or the output optical spectrum of the output optical signal may be indicative of, or may change responsive to, changes to the hydrocarbon industrial infrastructure.

The receiving at 120 may include receiving with, via, and/or utilizing the output signal receiver of the distributed fiber optic sensing system. Examples of the output signal receiver are disclosed herein with reference to output signal receiver 60.

The receiving at 120 may be performed with any suitable timing and/or sequence during methods 100. As examples, the receiving at 120 may be performed subsequent to the generating at 105, to the generating at 110, and/or to the providing at 115. As another example, the receiving at 120, or each instance of the repeatedly receiving at 120, may be responsive to the providing at 115, or to a corresponding instance of the providing at 115. As further examples, the receiving at 120 may be performed at least partially concurrently with the providing at 115, the generating at 125, the buffering at 130, the downsampling at 135, the comparing at 140, the detecting at 145, the analyzing at 150, the storing at 155, the storing at 160, the responding at 165, and/or the transmitting at 170.

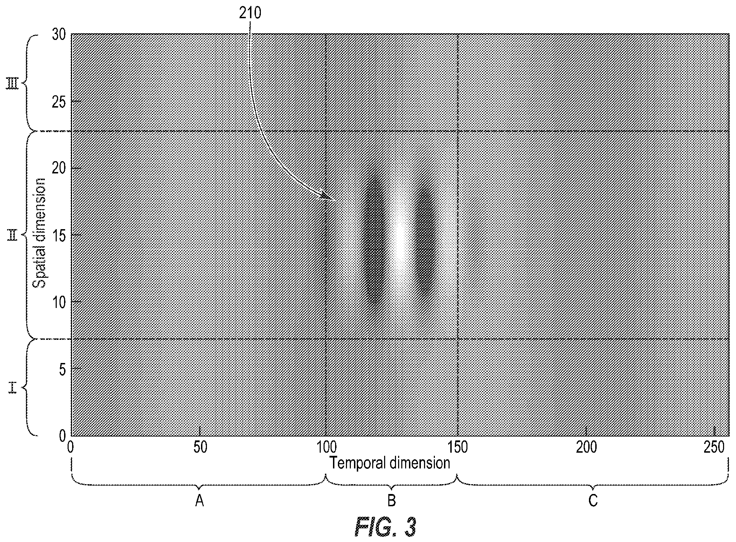

An example of the output optical signal and/or of the optical data that may be included in the output optical signal is illustrated in **FIG. 3****.** In **FIG. 3****,** an intensity of the output optical signal is plotted in two dimensions, with the ordinate corresponding to a spatial dimension of the output optical signal and the abscissa corresponding to a temporal dimension of the output optical signal. As an example, the spatial dimension may correspond to position along the length of the fiber optic cable, while the temporal dimension may correspond to passage of time. In particular, each instance of the repeatedly receiving at 120, which is received responsive to a corresponding instance of the repeatedly providing at 115, may be utilized to define a single array of intensity values along the spatial dimension (i.e., for a single value of the temporal dimension). In addition, prior and/or subsequent instances of the repeatedly providing at 115 and the repeatedly receiving at 120 may be utilized to define prior and/or subsequent arrays of intensity values along the spatial dimension (i.e., for corresponding values of the temporal dimension).

As discussed in more detail herein, FIG. 3 illustrates regions in which the output optical signal is constant, or at least substantially constant, in both the spatial dimension and the temporal dimension (e.g., regions A and C when viewed along the temporal dimension and regions 1 and III when viewed along the spatial dimension). In addition, **FIG. 3** illustrates regions in which the output optical signal varies and/or exhibits additional detail, which may be caused by changes in the local environment of the fiber optic cable (e.g., region B when viewed along the temporal dimension and region 11 when viewed along the spatial dimension). This additional detail may be referred to herein as a feature 210 within the optical data.

As discussed in more detail herein, methods 100 may treat these various regions differently, such as during the downsampling at 135, thereby permitting and/or facilitating a decrease in data volume in the decimated output data stream, when compared to the output data stream, while maintaining resolution sufficient to resolve important features that may be present in the output optical signal. Additionally or alternatively, and as also discussed in more detail herein, the detecting at 145 may be utilized to detect a transition from a region with one behavior to a region with a different behavior. As an example, the detecting at 145 may detect a transition, along the spatial dimension, from region I to region II and/or from region II to region III. As another example, the detecting at 145 may detect a transition, along the temporal dimension, from region A to region B and/or from region B to region C.

The receiving at 120 may be performed with any suitable timing and/or sequence during methods 100. As examples, the receiving at 120 may be performed subsequent to the generating at 105, to the generating at 110, and/or to the providing at 115. As additional examples, the receiving at 120 may be performed prior to and/or at least partially concurrently with the generating at 105, the generating at 110, the providing at 115, the generating at 125, the buffering at 130, the downsampling at 135, the comparing at 140, the detecting at 145, the analyzing at 150, the storing at 155, the storing at 160, the responding at 165, and/or the transmitting at 170.

Generating the output data stream at 125 may include generating the output data stream based, at least in part, on the output optical signal. Examples of the output data stream are disclosed herein with reference to output data stream 64. In some examples, the generating at 125 may include generating the output data stream with, via, and/or utilizing the output signal receiver. In some examples, the generating at 125 may include generating an output data electric signal, which may include and/or be an analog output data electric signal and/or a digital output data electric signal.

The generating at 125 may be performed with any suitable timing and/or sequence during methods 100. As examples, the generating at 125 may be performed subsequent to the generating at 105, to the generating at 110, to the providing at 115, and/or to the receiving at 120. As another example, the generating at 125 may be responsive to the receiving at 120. As additional examples, the generating at 125 may be performed at least partially concurrently with the generating at 105, the generating at 110, the providing at 115, the receiving at 120, the buffering at 130, the downsampling at 135, the comparing at 140, the detecting at 145, the analyzing at 150, the storing at 155, the storing at 160, the responding at 165, and/or the transmitting at 170.

Buffering the output data stream at 130 may include buffering and/or temporarily storing the output data stream as a buffered data stream for at least a threshold buffer time. This may permit and/or facilitate recovery, analysis, and/or storage of an entirety of the output data stream, or of a full resolution of the output data stream, that is generated during the threshold buffer time. As an example, and as discussed in more detail herein, it may be desirable to store and/or to transmit the buffered data stream responsive to the detecting at 145 and/or responsive to the analyzing at 150.

The threshold buffer time may have any suitable time duration, such as may permit and/or facilitate recovery, analysis, and/or storage of the output data stream generated during the time duration. Examples of the threshold buffer time include at least 30 seconds, at least 45 seconds, at least 1 minute, at least 2.5 minutes, at least 5 minutes, at least 10 minutes, at least 15 minutes, at least 20 minutes, or at least 30 minutes, at least 1 hour, at least 3 hours, at least 6 hours, at least 12 hours, at least 1 day, at least 1 week, at least 2 weeks, at least 1 month, at least 2 months, at least 3 months, at least 4 months, at least 5 months, at least 6 months, at most 1 year, at most 10 months, at most 8 months, at most 6 months, at most 4 months, at most 2 months, at most 1 month, at most 2 weeks, at most 1 week, at most 4 days, at most 2 days, at most 1 day, at most 18 hours, at most 12 hours, at most 6 hours, at most 5 hours, at most 4 hours, at most 3 hours, at most 2 hours, and/or at most 1 hour.

Additionally, or alternatively, the threshold buffer time may be at least a threshold buffer time multiple of a detection timeframe between initiation of the anomalous behavior and detection of the anomalous behavior, such as during the detecting at 145. Examples of the threshold buffer time multiple include at least 1, at least 1.1, at least 1.5, at least 2, at least 3, at least 4, or at least 5.

The buffering at 130 may be performed with any suitable timing and/or sequence during methods 100. As examples, the buffering at 130 may be performed subsequent to the generating at 105, to the generating at 110, to the providing at 115, to the receiving at 120, and/or to the generating at 125. As another example, the buffering at 130 may be responsive to the generating at 125. As additional examples, the buffering at 130 may be performed at least partially concurrently with the generating at 105, the generating at 110, the providing at 115, the receiving at 120, the generating at 125, the downsampling at 135, the comparing at 140, the detecting at 145, the analyzing at 150, the storing at 155, the storing at 160, the responding at 165, and/or the transmitting at 170.

Downsampling the output data stream at 135 may include downsampling the output data stream with, via, and/or utilizing the predetermined decimation algorithm. This may include downsampling the output data stream such that a given information resolution of a given subset of the optical data, which is generated by a given region of the fiber optic cable, differs from another information resolution of another subset of the optical data, which is generated by another region of the fiber optic cable.

The downsampling at 135 may be accomplished in any suitable manner that may decrease a resolution of the given subset of the optical data and/or of the another subset of the optical data such that the given information resolution differs from the another information resolution. As examples, the downsampling at 135 may include randomly selecting one or more data points from the given subset of the optical data and/or from the another subset of the optical data, averaging all data points in the given subset of the optical data and/or in the another subset of the optical data, and/or filtering the given subset of the optical data and/or the another subset of the optical data, such as via utilizing any suitable high pass filter, low pass filter, band pass filter, and/or median filter.

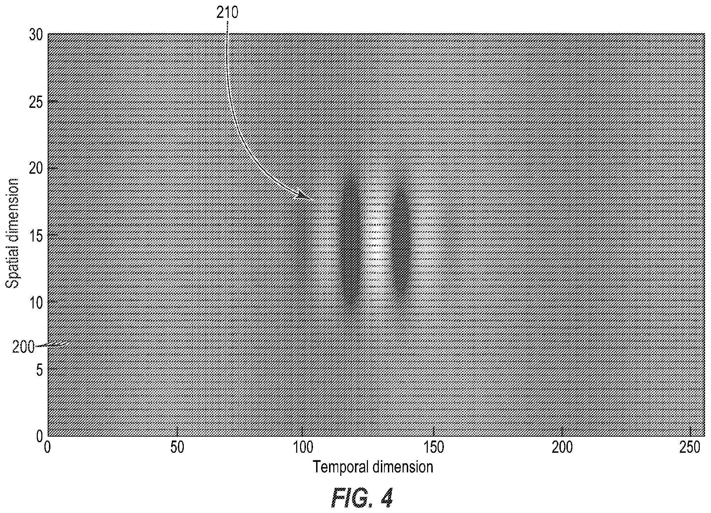

As discussed in more detail herein, the downsampling at 135 may permit and/or facilitate improved storage, transmission, and/or analysis of the optical data included within the output optical signal, such as via decreasing the volume of data contained within the decimated output data stream, when compared to the output data stream, while at the same time retaining a resolution that is sufficient to resolve, to detect, and/or to analyze important features contained within the output optical signal and/or within the output data stream. **FIG. 4** is an illustration of uniform sampling of the optical data illustrated in **FIG. 3** in both a spatial dimension and a temporal dimension and illustrates data points 200 as black dots. Such uniform sampling may provide a resolution that is sufficient to resolve, to detect, and/or to analyze important features present within the optical data; however, the volume of data present within this uniform sampling of the optical data may be computationally difficult to effectively store, transmit, and/or analyze. As such, generation of the decimated output data stream during the downsampling at 135 may provide significant benefits in terms of improved storage, transmission, and/or analysis of the optical data; and specific examples of the downsampling at 135 are discussed below.

The output data stream may include optical data for a first dimension, optical data for a second dimension, and/or optical data for a third dimension. The first dimension may differ from the second dimension and/or the third dimension may differ from both the first dimension and the second dimension. As an example, the first dimension may include and/or be the spatial dimension, the second dimension may include and/or be the temporal dimension, and the third dimension may include and/or be a spectral dimension.

In such a configuration, the downsampling at 135 may include downsampling the optical data in the first dimension, downsampling the optical data in the second dimension, and/or downsampling the optical data in the third dimension. This may include differently downsampling the optical data in the first dimension as compared to the second dimension, differently downsampling the optical data in the first dimension as compared to the third dimension, and/or differently downsampling the optical data in the second dimension as compared to the third dimension.

As an example, the downsampling the optical data in the first dimension may include downsampling such that the given information resolution of the given subset of the optical data in the first dimension, which is generated by a first dimension given region of the fiber optic cable and/or during a first dimension given timeframe, differs from another information resolution of another subset of the optical data in the first dimension that is generated by another first dimension region of the fiber optic cable and/or during another first dimension given timeframe. As another example, the downsampling the optical data in the second dimension may include downsampling such that the given information resolution of the given subset of the optical data in the second dimension, which is generated by a second dimension given region of the fiber optic cable and/or during a second dimension given timeframe, differs from another information resolution of another subset of the optical data in the second dimension that is generated by another second dimension region of the fiber optic cable and/or during another second dimension given timeframe. As another example, the downsampling the optical data in the third dimension may include downsampling such that the given information resolution of the given subset of the optical data in the third dimension, which is generated by a third dimension given region of the fiber optic cable and/or during a third dimension given timeframe, differs from another information resolution of another subset of the optical data in the third dimension that is generated by another third dimension region of the fiber optic cable and/or during another third dimension given timeframe. The first dimension given region of the fiber optic cable, the second dimension given region of the fiber optic cable, and/or the third dimension given region of the fiber optic cable may differ from one another. Additionally, or alternatively, the first dimension given timeframe, the second dimension given timeframe, and/or the third dimension given timeframe may differ from one another.

The first dimension, the second dimension, and/or the third dimension are not required to be mutually exclusive, independent, and/or orthogonal to one another. As an example, two or more of the first dimension, the second dimension, and the third dimension may be non-orthogonal and/or self-consistent dimensions. As another example, one or more of the first dimension, the second dimension, and the third dimension may be calculated and/or derived from one or more other of the first dimension, the second dimension, and the third dimension.

In a specific example, the downsampling at 135 may include downsampling in the spatial dimension. As an example, the optical data may define a maximum spatial resolution of the distributed fiber optic sensing system and/or of the optical data, such as may be illustrated in FIG. 4 by data points 200 that extend vertically along the spatial dimension of the optical data. In such a configuration, the downsampling at 135 may include downsampling such that the given information resolution is a given spatial resolution and also such that the another information resolution is another spatial resolution, which differs from the given spatial resolution. The given spatial resolution and/or the another spatial resolution may differ from and/or be less than the maximum spatial resolution.

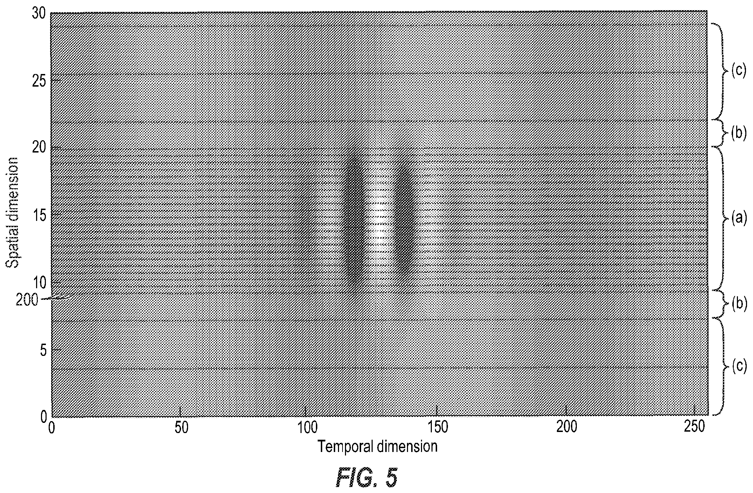

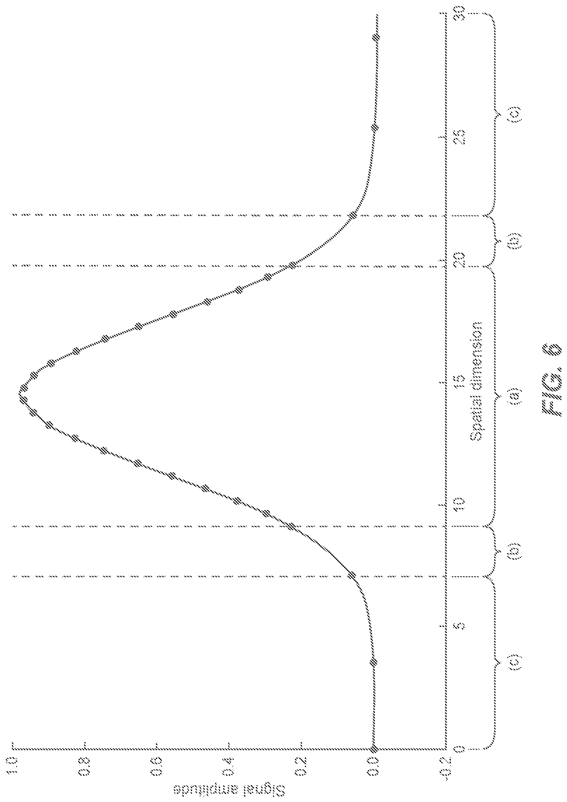

This is illustrated in **FIGs. 5-6****,** with **FIG. 5** being an illustration of downsampling the optical data illustrated in **FIG. 3** in the spatial dimension and **FIG. 6** being an illustration of signal amplitude as a function of the spatial dimension for the downsampling illustrated in **FIG. 5****.** In the example of **FIGs. 5-6****,** region (a) is sampled at the maximum spatial resolution (i.e., at the same resolution as is illustrated in **FIG. 4****),** region (b) is sampled at a lower spatial resolution, and region (c) is sampled at an even lower spatial resolution. This is illustrated by the lower density of data points 200 in region (b) when compared to region (a) and/or in region (c) when compared to regions (a) and (b). Such a downsampling strategy may permit and/or facilitate spatial resolution of feature 210 (i.e., along the spatial dimension) while decreasing the volume of data contained within regions of the optical data that are relatively constant and/or that do not include feature 210, as illustrated, for example, by the decrease in data points 200 in **FIG. 5** when compared to **FIG. 4****.**

It is within the scope of the present disclosure that the downsampling in the spatial dimension may include downsampling by any suitable amount and/or magnitude. As an example, a ratio of the given spatial resolution to the another spatial resolution may be at least 2, at least 4, at least 6, at least 8, at least 10, at least 15, at least 20, at least 30, at least 40, at least 50, at least 100, at least 250, at least 500, at most 1000, at most 900, at most 800, at most 700, at most 600, at most 500, at most 450, at most 400, at most 350, at most 300, at most 250, at most 200, at most 150, at most 100, at most 80, at most 60, at most 40, and/or at most 20.

In another specific example, the downsampling at 135 may include downsampling in the temporal dimension. As an example, the output optical signal and/or the optical data may define a maximum temporal resolution of the optical data and/or of the distributed fiber optic sensing system, such as may be illustrated in **FIG. 4** by data points 200 that extend horizontally along the temporal dimension of the optical data. Stated differently, the optical data may include a temporal information component regarding the local environment of the fiber optic cable as a function of time. In such a configuration, the downsampling at 135 may include downsampling such that the given information resolution is a given temporal resolution and also such that the another information resolution is another temporal resolution, which differs from the given temporal resolution. The given temporal resolution and/or the another temporal resolution may differ from and/or be less than the maximum temporal resolution.

The downsampling in the temporal dimension may be accomplished in any suitable manner. As an example, the downsampling at 135 may include downsampling such that the decimated output data stream continuously includes the given subset of the optical data at the given temporal resolution, which may be equal to or less than the maximum temporal resolution. Additionally, or alternatively, the downsampling at 135 may include downsampling such that the decimated output data stream continuously includes the another subset of the optical data at the another temporal resolution, which may be equal to or less than the maximum temporal resolution. Stated differently, a temporal frequency at which the optical data is present within the decimated output data stream, or a time period between adjacent data points within the decimated output data stream, may be less than a temporal frequency at which the optical data is present within the output data stream. As examples, a ratio of the temporal frequency at which the optical data is present within the decimated output data stream to the temporal frequency at which the optical data is present within the output data stream may be at least 0.0001, at least 0.0005, at least 0.001, at least 0.005, at least 0.01, at least 0.05, at least 0.1, at most 0.99, at most 0.95, at most 0.9, at most 0.8, at most 0.7, at most 0.6, at most 0.5, at most 0.25, at most 0.1, at most 0.05, at most 0.01, and/or at most 0.005.

As another example, the downsampling at 135 may include downsampling such that the decimated output data stream intermittently includes the given subset of the optical data at the maximum temporal resolution or intermittently includes the another subset of the optical data at the maximum temporal resolution. In such a configuration, the decimated output data stream also may intermittently include the given subset of the optical data and/or the another subset of the optical data at another output signal temporal resolution, which is less than the maximum temporal resolution, and/or may include time periods within which no temporal data is contained within the decimated output data stream. As a specific example, the decimated output data stream may include the given subset of the optical data or the another subset of the optical data at the maximum temporal resolution for a given timeframe within an overall time period. Examples of ratios of the given timeframe to the overall time period include at least 0.01, at least 0.05, at least 0.1, at least 0.2, at least 0.3, at most 0.99, at most 0.95, at most 0.9, at most 0.8, at most 0.7, at most 0.6, at most 0.5, at most 0.4, at most 0.3, and/or at most 0.2.

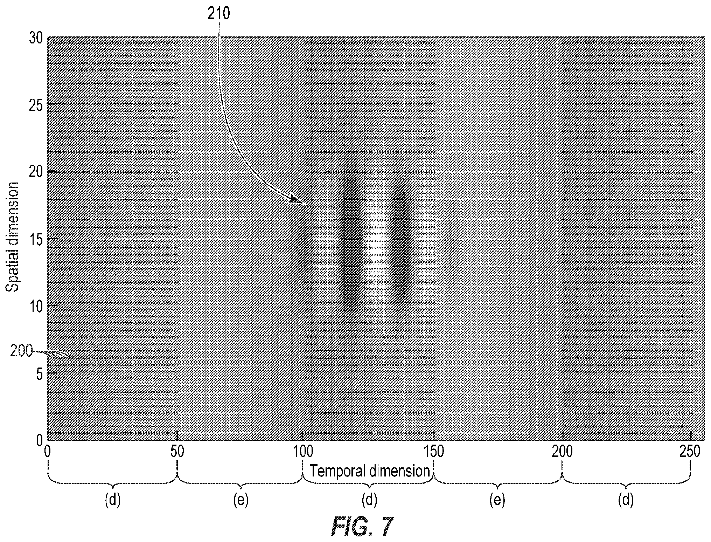

This is illustrated in **FIGs. 7-8****,** with **FIG. 7** being an illustration of downsampling the optical data illustrated in **FIG. 3** in the temporal dimension and **FIGs. 7-8** being an illustration of signal amplitude as a function of the temporal dimension for the downsampling illustrated in **FIG. 7****.** In the example of **FIGs. 7-8****,** regions (d) are sampled at the maximum temporal resolution (i.e., at the same resolution as is illustrated in **FIG. 4****)** and regions (e) are not sampled. This is illustrated by the lack of data points 200 in regions (e). Such a downsampling strategy may permit and/or facilitate resolution of feature 210 when feature 210 occurs during a known and/or predetermined timeframe while decreasing the volume of data contained within the decimated output data stream. Additionally, or alternatively, such a downsampling strategy may permit and/or facilitate periodic sampling of the optical data to detect changes thereto, such as may be represented by feature 210.

As discussed, the output optical signal may define an output optical spectrum. With this in mind, and in another specific example, the downsampling at 135 may include downsampling in the spectral dimension. Stated differently, the output optical signal may include a spectral information component regarding a spectral response of the local environment of the fiber optic cable, such as may be illustrated by differing intensities of individual data points in **FIG. 4****.** In such a configuration, the given information resolution may include downsampling such that the given information resolution is a given spectral resolution and also such that the another information resolution is another spectral resolution, which differs from the given spectral resolution.

The downsampling in the spectral dimension may be accomplished in any suitable manner. As examples, the downsampling in the spectral dimension may include downsampling via any suitable high pass filter, low pass filter, band pass filter, and/or median filter to decrease the spectral resolution within the given subset of the optical data and/or within the another subset of the optical data. As another example, the downsampling in the spectral dimension may include downsampling to retain one or more characteristics and/or major frequency components from the given subset of the optical data and/or from the another subset of the optical data, such as via a Fourier transform.

The output optical spectrum may define a maximum spectral resolution of the distributed fiber optic sensing system and/or of the optical data. With this in mind, the given spectral resolution and/or the another spectral resolution may be less than the maximum spectral resolution.

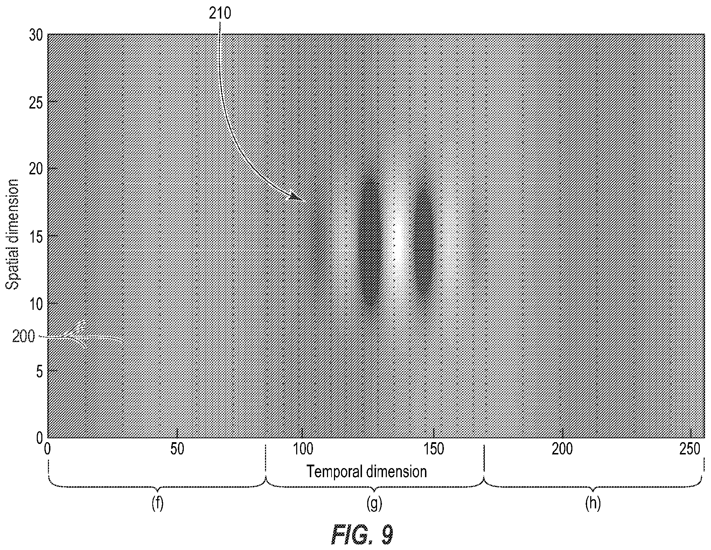

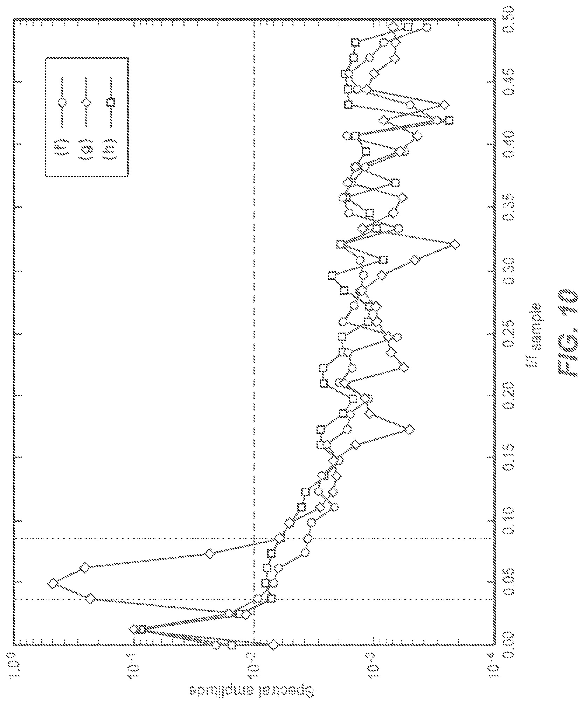

**FIGs. 9-10** illustrate downsampling in the spectral dimension. More specifically, **FIG. 9** is an illustration of downsampling the optical data illustrated in **FIG. 3** in the spectral dimension, and **FIG. 10** is an illustration of spectral amplitude as a function of normalized frequency for the downsampling illustrated in **FIG. 9****.** In the example of **FIG. 9****,** regions (f), (g), and (h) may be sampled at different spectral resolutions, as indicated by differing spacings among data points 200 in these regions. As illustrated, the spectral sampling resolution within region (g), which includes feature 210, is higher than the spectral sampling resolution within regions (f) and (h), which do not include significant features. Such a downsampling strategy may permit resolution of spectral components of feature 210 while decreasing the overall data volume in the decimated output data stream when compared to the output data stream.

The downsampling that is illustrated in **FIG. 9** may be accomplished by applying different buffers, or filters, to the output data stream in regions (f), (g), and (h). The result of application of these different buffers is illustrated in **FIG. 10****,** which indicates that a primary frequency component in region (g) differs from the primary frequency component in regions (f) and (h). As discussed, **FIG. 10** illustrates this difference in terms of normalized frequency; however, a related parameter, such as wavenumber, also may be utilized.

**FIGs. 3-10** provide examples of visualizations of optical data and/or of downsampling strategies that may be employed in various dimensions, including the spatial dimension that is illustrated in **FIGs. 5-6****,** the temporal dimension that is illustrated in **FIGs. 7-8****,** and/or the spectral dimension that is illustrated in **FIGs. 9-10****.** However, it is within the scope of the present disclosure that methods 100 and/or the downsampling at 135 may be employed in any suitable dimension of the optical data, including calculated and/or derived dimensions.

The downsampling at 135 may be performed with any suitable timing and/or sequence during methods 100. As examples, the downsampling at 135 may be performed subsequent to the generating at 105, to the generating at 110, to the providing at 115, to the receiving at 120, to the generating at 125, and/or to the buffering at 130. As another example, the downsampling at 135 may be responsive to the generating at 125. As additional examples, the downsampling at 135 may be performed at least partially concurrently with the generating at 105, the generating at 110, the providing at 115, the receiving at 120, the generating at 125, the buffering at 130, the comparing at 140, the detecting at 145, the analyzing at 150, the storing at 155, the storing at 160, the responding at 165, and/or the transmitting at 170.

Comparing the decimated output data stream at 140 may include comparing the decimated output data stream to the reference decimated output data. This may include comparing to permit and/or facilitate the detecting at 145. The comparing at 140 may be accomplished in any suitable manner. As an example, the comparing at 140 may include comparing a subset of the optical data within the decimated output data stream to a corresponding subset of the optical data within the reference decimated output data. Stated differently, the comparing at 140 may include comparing to permit and/or facilitate determining that there is a difference between the subset of the optical data within the decimated output data stream and the corresponding subset of the optical data within the reference decimated output data, such as during the detecting at 145. As another example, the comparing at 140 may include comparing a mathematical representation of the optical data within the decimated output data stream and/or a statistical representation of the optical data within the decimated output data stream to the corresponding optical data within the reference decimated output data, to a corresponding mathematical representation of the optical data within the reference decimated output data stream, and/or to a corresponding statistical representation of the optical data within the reference decimated output data stream.

The comparing at 140 may be performed with any suitable timing and/or sequence during methods 100. As examples, the comparing at 140 may be performed subsequent to the generating at 105, to the generating at 110, to the providing at 115, to the receiving at 120, to the generating at 125, to the buffering at 130, and/or to the downsampling at 135. As another example, the comparing at 140 may be responsive to the downsampling at 135. As additional examples, the comparing at 140 may be performed at least partially concurrently with the generating at 105, the generating at 110, the providing at 115, the receiving at 120, the generating at 125, the buffering at 130, the downsampling at 135, the detecting at 145, the analyzing at 150, the storing at 155, the storing at 160, the responding at 165, and/or the transmitting at 170.

Detecting anomalous behavior at 145 may include determining that the subset of the optical data within the decimated output data stream differs from the corresponding subset of the optical data within the reference decimated output data and/or within a reference decimated output data stream that includes the reference decimated output data. Examples of the anomalous behavior include an increase in noise between the subset of the optical data and the corresponding subset of the optical data, a decrease in noise between the subset of the optical data and the corresponding subset of the optical data, appearance of a feature within the subset of the optical data that is not present within the corresponding subset of the optical data, disappearance of a feature from the subset of the optical data that is present in the corresponding subset of the optical data, a shift between the subset of the optical data compared to the corresponding subset of the optical data, and/or a change from one steady-state behavior in the subset of the optical data to another steady-state behavior in the subset of the optical data.

The detecting at 145 may be performed in any suitable manner. As an example, the detecting at 145 may include detecting the anomalous behavior with, via, and/or utilizing a change and/or an anomaly detection algorithm. As another example, the detecting at 145 may include determining that the subset of the optical data is statistically distinct from the corresponding subset of the optical data and/or that a specified confidence interval for the subset of the optical data differs from a corresponding confidence interval for the corresponding subset of the optical data.

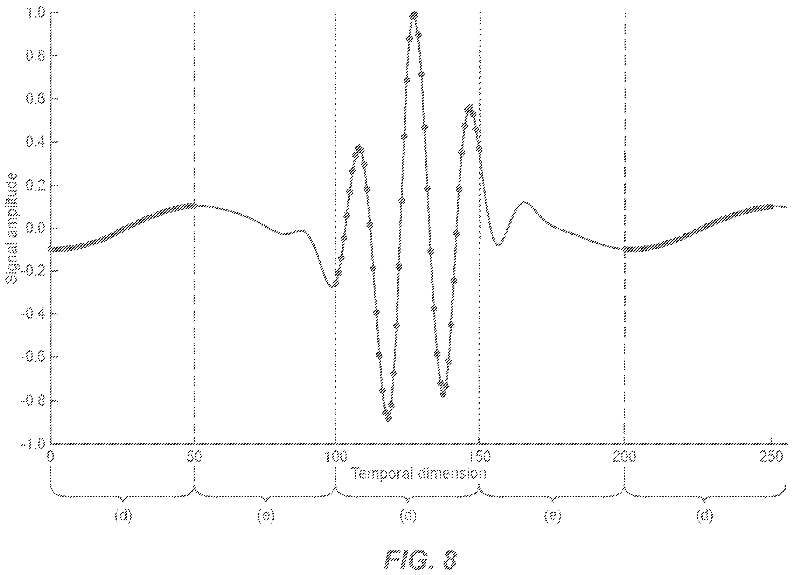

The anomalous behavior may be detected in any suitable dimension. As an example, the detecting at 145 may include detecting the anomalous behavior in the spatial dimension, as illustrated in **FIG. 6** by the increase in signal intensity in region (a) as compared to regions (b) and (c). As another example, the detecting at 145 may include detecting the anomalous behavior in the temporal dimension, as illustrated in **FIG. 8** by the oscillations in signal amplitude in region (d) when compared to regions (d) and (e). As another example, the detecting at 145 may include detecting the anomalous behavior in the spectral dimension, as illustrated in **FIG. 10** by the shift in characteristic frequency for the data from region (g) of **FIG. 9** when compared to the data from regions (f) and (h) of **FIG. 9****.**

The detecting at 145 may be performed with any suitable timing and/or sequence during methods 100. As examples, the detecting at 145 may be performed subsequent to the generating at 105, to the generating at 110, to the providing at 115, to the receiving at 120, to the generating at 125, to the buffering at 130, to the downsampling at 135, and/or to the comparing at 140. As additional examples, the detecting at 145 may be performed at least partially concurrently with the generating at 105, the generating at 110, the providing at 115, the receiving at 120, the generating at 125, the buffering at 130, the downsampling at 135, the comparing at 140, the detecting at 145, the analyzing at 150, the storing at 155, the storing at 160, the responding at 165, and/or the transmitting at 170.

Analyzing a subset of optical data at 150 may include analyzing the subset of the optical data within the decimated output data stream that differs from the corresponding subset of the optical data within the reference decimated output data. Stated differently, the detecting at 145 may include determining that at least a portion of the decimated output data stream differs from the reference decimated output data, and the analyzing at 150 may include analyzing the portion of the decimated output data stream.

The analyzing at 150 may be performed in any suitable manner. As an example, the analyzing at 150 may include comparing the subset of the optical data to an optical information database that includes optical data and known sources for the optical data. This may permit and/or facilitate identification of the source for the anomalous behavior. As another example, the analyzing at 150 may include determining that the subset of optical data is generated by a known source. In such an example, the analyzing at 150 further may include generating a notification that the subset of the optical data is generated by the known source. Alternatively, the analyzing at 150 may include determining that the subset of the optical data is generated by an unknown source. In such an example, the analyzing at 150 further may include generating a notification that the subset of the optical data is generated by the unknown source.

It is within the scope of the present disclosure that the analyzing at 150 may be performed in real-time, such as with an edge computer that is proximate the hydrocarbon industrial infrastructure. Stated differently, the analyzing at 150 may be performed at least partially concurrently with the generating at 105, the generating at 110, the providing at 115, the receiving at 120, the generating at 125, the buffering at 130, the downsampling at 135, the comparing at 140, the detecting at 145, the storing at 155, the storing at 160, the responding at 165, and/or the transmitting at 170. Additionally, or alternatively, it is also within the scope of the present disclosure that the analyzing at 150 may be performed at a later time, such as subsequent to the storing at 155, to the storing at 160, and/or to the transmitting at 170.

It is within the scope of the present disclosure that the detecting at 145 may include detecting a shift in the output optical signal, such as via the decimated output data stream. With this in mind, the analyzing at 150 also may include analyzing the shift in the output optical signal. When the shift defines a new steady state for the hydrocarbon industrial infrastructure, methods 100 further may include performing the generating at 105, such as to adjust the predetermined decimation algorithm based, at least in part, on the shift in the output optical signal. Additionally, or alternatively, methods 100 may include performing the generating at 110, such as to adjust the reference decimated output data based, at least in part, on the shift in the output optical signal.

Storing the decimated output data stream at 155 may include storing the decimated output data stream in any suitable manner. As an example, the storing at 155 may include storing the decimated output data stream with, on, and/or utilizing an electronic data storage device. Examples of the electronic data storage device are disclosed herein with reference to electronic data storage device 70. The electronic data storage device may be local to and/or remote from the distributed fiber optic sensing system, and the downsampling at 135 may decrease the overall capacity requirements of the electronic data storage device when compared to storage of the output data stream prior to the downsampling at 135. This may include periodically or continuously storing an entirety of the decimated output data stream and/or a predetermined portion of the decimated output data stream.

As another example, the storing at 155 may include storing a subset of the output data stream, which corresponds to the subset of the optical data within the decimated output data stream, on the electronic data storage device. Stated differently, and responsive to the detecting at 145, the storing at 155 may include storing full-resolution data within the subset of the output data stream, such as to permit and/or facilitate analysis and/or characterization of the full-resolution data.

The storing at 155 may be performed with any suitable timing and/or sequence during methods 100. As examples, the storing at 155 may be performed subsequent to the generating at 105, to the generating at 110, to the providing at 115, to the receiving at 120, to the generating at 125, to the buffering at 130, to the downsampling at 135, to the comparing at 140, to the detecting at 145, and/or to the analyzing at 150. As another example, the storing at 155 may be responsive to the downsampling at 135, to the comparing at 140, to the determining at 145, and/or to the analyzing at 150. As yet another example, the storing at 155 may permit and/or facilitate the analyzing at 150. As additional examples, the storing at 155 may be performed at least partially concurrently with the generating at 105, the generating at 110, the providing at 115, the receiving at 120, the generating at 125, the buffering at 130, the downsampling at 135, the comparing at 140, the detecting at 145, the analyzing at 150, the storing at 160, the responding at 165, and/or the transmitting at 170.

Storing the buffered data stream at 160 may include storing at least a subset of the buffered data stream, as generated during the buffering at 130. As an example, and responsive to the detecting anomalous behavior at 145, methods 100 may include storing, at 160, the subset of the buffered data stream, which includes the output data stream at full and/or native resolution, such as to permit and/or to facilitate analysis of the subset of the buffered data stream. Such a configuration may permit and/or facilitate analysis and/or determination of a source of the change in the decimated output data stream. As another example, the storing at 160 may include storing processed and/or analyzed information from the output data stream and/or from the decimated output data stream, such as may result from any suitable mathematical and/or statistical representation of information from the output data stream and/or from the decimated output data stream.

The storing at 160 may be accomplished in any suitable manner. As an example, the storing at 160 may include storing the subset of the buffered data stream with, via, and/or utilizing the electronic data storage device. As another example, the storing at 160 may include performing the transmitting at 170 to transmit the subset of the buffered data stream to any suitable data storage location.

Responding to the anomalous behavior at 165 may include responding to any suitable change and/or shift in the decimated output data stream in any suitable manner. As examples, the responding at 165 may include initiating an alarm and/or generating a notification indicative of the anomalous behavior. As another example, the responding at 165 may include adjusting at least one process parameter of the hydrocarbon industrial infrastructure, such as via driving the hydrocarbon industrial infrastructure in a desired direction, adjustment of one or more system pressures within the hydrocarbon industrial infrastructure, injection of one or more chemicals into the hydrocarbon industrial infrastructure, and/or adjustment of one or more fluid flow rates within the hydrocarbon industrial infrastructure.

As additional examples, the responding at 165 may include analyzing the anomalous behavior, characterizing the anomalous behavior, and/or identifying a source for the anomalous behavior. As another example, the responding at 165 may include replacing at least one component of the hydrocarbon industrial infrastructure, such as may be responsive to determination that the anomalous behavior is a result of the at least one component being worn and/or defective. As another example, the responding at 165 may include initiating maintenance of the hydrocarbon industrial infrastructure, such as may be responsive to determination that the anomalous behavior is a result of the hydrocarbon industrial infrastructure being in need of maintenance.

As additional examples, the responding at 165 may include modifying and/or changing one or more aspects of the providing at 115, the receiving at 120, the generating at 125, and/or the downsampling at 135. As an example, the responding at 165 may include modifying the providing at 115 via modification of a rate, schedule, and/or duty cycle at which the input optical signal is provided to the fiber optic cable. As another example, the responding at 165 may include modifying the receiving at 120, such as may be a result of the modification to the providing at 115. As another example, the responding at 165 may include modifying the predetermined decimation algorithm utilized during the downsampling at 135.

The responding at 165 may be performed with any suitable timing and/or sequence during methods 100. As examples, the responding at 165 may be performed subsequent to the generating at 105, to the generating at 110, to the providing at 115, to the receiving at 120, to the generating at 125, to the buffering at 130, to the downsampling at 135, to the comparing at 140, to the detecting at 145, to the analyzing at 150, to the storing at 155, and/or to the storing at 160. As another example, the responding at 165 may be responsive to the detecting at 145 and/or to the analyzing at 150. As additional examples, the responding at 165 may be performed at least partially concurrently with the generating at 105, the generating at 110, the providing at 115, the receiving at 120, the generating at 125, the buffering at 130, the downsampling at 135, the comparing at 140, the detecting at 145, the analyzing at 150, the storing at 155, the storing at 160, and/or the transmitting at 170.

Transmitting the decimated output data stream at 170 may include transmitting the decimated output data stream in any suitable manner and/or to any suitable structure. As examples, the transmitting at 170 may include transmitting the decimated output data stream via a wired data connection, via an optical data connection, via a wireless data connection, via a Wi-Fi connection, via a cellular connection, and/or via a satellite connection. This may include transmitting the decimated output data stream to a remote computer and/or to the electronic data storage device. As discussed in more detail herein, the decimated output data stream may include a decreased data volume when compared to the output data stream. As such, methods 100 may permit and/or facilitate performing the transmitting at 170 at lower cost when compared to transmission of the output data stream, at higher speeds when compared to transmission of the output data stream, and/or in circumstances in which transmission of the output data stream may not be feasible.

The transmitting at 170 may be performed with any suitable timing and/or sequence during methods 100. As examples, the transmitting at 170 may be performed subsequent to the generating at 105, to the generating at 110, to the providing at 115, to the receiving at 120, to the generating at 125, to the buffering at 130, to the downsampling at 135, to the comparing at 140, to the detecting at 145, to the analyzing at 150, to the storing at 155, to the storing at 160, and/or to the responding at 165. As another example, the transmitting at 170 may be responsive to the detecting at 145 and/or to the analyzing at 150. As additional examples, the transmitting at 170 may be performed at least partially concurrently with the generating at 105, the generating at 110, the providing at 115, the receiving at 120, the generating at 125, the buffering at 130, the downsampling at 135, the comparing at 140, the detecting at 145, the analyzing at 150, the storing at 155, the storing at 160, and/or the responding at 165.

In the present disclosure, several of the illustrative, non-exclusive examples have been discussed and/or presented in the context of flow diagrams, or flow charts, in which the methods are shown and described as a series of blocks, or steps. Unless specifically set forth in the accompanying description, it is within the scope of the present disclosure that the order of the blocks may vary from the illustrated order in the flow diagram, including with two or more of the blocks (or steps) occurring in a different order and/or concurrently. It is also within the scope of the present disclosure that the blocks, or steps, may be implemented as logic, which also may be described as implementing the blocks, or steps, as logics. In some applications, the blocks, or steps, may represent expressions and/or actions to be performed by functionally equivalent circuits or other logic devices. The illustrated blocks may, but are not required to, represent executable instructions that cause a computer, processor, and/or other logic device to respond, to perform an action, to change states, to generate an output or display, and/or to make decisions.

As used herein, the term "and/or" placed between a first entity and a second entity means one of (1) the first entity, (2) the second entity, and (3) the first entity and the second entity. Multiple entities listed with "and/or" should be construed in the same manner, i.e., "one or more" of the entities so conjoined. Other entities may optionally be present other than the entities specifically identified by the "and/or" clause, whether related or unrelated to those entities specifically identified. Thus, as a non-limiting example, a reference to "A and/or B," when used in conjunction with open-ended language such as "comprising" may refer, in one embodiment, to A only (optionally including entities other than B); in another embodiment, to B only (optionally including entities other than A); in yet another embodiment, to both A and B (optionally including other entities). These entities may refer to elements, actions, structures, steps, operations, values, and the like.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one embodiment, to at least one, optionally including more than one, A, with no B present (and optionally including entities other than B); in another embodiment, to at least one, optionally including more than one, B, with no A present (and optionally including entities other than A); in yet another embodiment, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa.

As used herein, the phrase, "for example," the phrase, "as an example," and/or simply the term "example," when used with reference to one or more components, features, details, structures, embodiments, and/or methods according to the present disclosure, are intended to convey that the described component, feature, detail, structure, embodiment, and/or method is an illustrative, non-exclusive example of components, features, details, structures, embodiments, and/or methods according to the present disclosure. Thus, the described component, feature, detail, structure, embodiment, and/or method is not intended to be limiting, required, or exclusive/exhaustive; and other components, features, details, structures, embodiments, and/or methods, including structurally and/or functionally similar and/or equivalent components, features, details, structures, embodiments, and/or methods, are also within the scope of the present disclosure.

As used herein, "at least substantially," when modifying a degree or relationship, may include not only the recited "substantial" degree or relationship, but also the full extent of the recited degree or relationship. A substantial amount of a recited degree or relationship may include at least 75% of the recited degree or relationship. For example, an object that is at least substantially formed from a material includes objects for which at least 75% of the objects are formed from the material and also includes objects that are completely formed from the material. As another example, a first length that is at least substantially as long as a second length includes first lengths that are within 75% of the second length and also includes first lengths that are as long as the second length.

### Industrial Applicability

The systems and methods disclosed herein are applicable to the oil and gas industries.

It is believed that the disclosure set forth above encompasses multiple distinct inventions with independent utility. While each of these inventions has been disclosed in its preferred form, the specific embodiments thereof as disclosed and illustrated herein are not to be considered in a limiting sense as numerous variations are possible. The subject matter of the inventions includes all novel and non-obvious combinations and subcombinations of the various elements, features, functions, and/or properties disclosed herein. Similarly, where the claims recite "a" or "a first" element or the equivalent thereof, such claims should be understood to include incorporation of one or more such elements, neither requiring nor excluding two or more such elements.

It is believed that the following claims particularly point out certain combinations and subcombinations that are directed to one of the disclosed inventions and are novel and non-obvious. Inventions embodied in other combinations and subcombinations of features, functions, elements, and/or properties may be claimed through amendment of the present claims or presentation of new claims in this or a related application.

## Claims

1. A method of processing optical data generated by a distributed fiber optic sensing system including a fiber optic cable that extends proximate hydrocarbon industrial infrastructure, the method comprising:
repeatedly providing, to the fiber optic cable, an input optical signal;
repeatedly receiving, from the fiber optic cable and responsive to the repeatedly providing, an output optical signal, wherein the output optical signal includes the optical data, which includes information regarding a local environment of the fiber optic cable as a function of position along a length of the fiber optic cable;
generating an output data stream that is based, at least in part, on the output optical signal;
downsampling the output data stream utilizing a predetermined decimation algorithm to generate a decimated output data stream;
comparing the decimated output data stream to reference decimated output data;
detecting anomalous behavior by determining that a subset of the optical data within the decimated output data stream differs from a corresponding subset of the optical data within the reference decimated output data; and
responsive to the determining, analyzing the subset of the optical data.

2. The method of claim 1, wherein the method further includes generating the reference decimated output data.

3. The method of claim 2, wherein the method further includes generating the predetermined decimation algorithm based, at least in part, on the reference decimated output data.

4. The method of any of claims 2-3, wherein the generating the reference decimated output data includes performing the repeatedly providing, the repeatedly receiving, and the generating the output data stream for a reference time period to generate a reference output data stream.

5. The method of claim 4, wherein the generating the reference decimated output data further includes identifying, within the reference output data stream, a plurality of regions of steady-state spatial behavior.

6. The method of claim 5, wherein each region of steady-state spatial behavior of the plurality of regions of steady-state spatial behavior is defined along a corresponding fraction of the length of the fiber optic cable.

7. The method of claim 6, wherein the generating the reference decimated output data further includes, for each region of steady-state spatial behavior:
(i) determining a corresponding region spatial resolution sufficient to resolve variation within a subset of the output optical signal generated by the corresponding fraction of the length of the fiber optic cable; and
(ii) downsampling a corresponding subset of the reference output data stream to the corresponding region spatial resolution.

8. The method of claim 7, wherein the corresponding region spatial resolution is sufficient to resolve spatial variation within the output optical signal generated by the corresponding fraction of the length of the fiber optic cable.

9. The method of any of claims 7-8, wherein the corresponding region spatial resolution for at least one region of steady-state spatial behavior differs from the corresponding region spatial resolution for at least one other region of steady-state spatial behavior.

10. The method of any of claims 1-9, wherein the method further includes generating the predetermined decimation algorithm such that a resolution of the decimated output data stream as a function of position along the length of the fiber optic cable corresponds to a resolution of the reference decimated output data as a function of position along the length of the fiber optic cable.

11. The method of any of claims 4-10, wherein the generating the reference decimated output data further includes identifying, within the reference output data stream, a plurality of regions of steady-state temporal behavior.

12. The method of claim 11, wherein each region of steady-state temporal behavior of the plurality of regions of steady-state temporal behavior is defined during a corresponding fraction of the reference time period.

13. The method of claim 12, wherein the generating the reference decimated output data further includes, for each region of steady-state temporal behavior:
(i) determining a corresponding region temporal resolution sufficient to resolve variation within a subset of the output optical signal generated during the corresponding fraction of the reference time period; and
(ii) downsampling a corresponding subset of the reference output data stream to the corresponding region temporal resolution.

14. The method of claim 13, wherein the corresponding region temporal resolution is sufficient to resolve temporal variation within the output optical signal during the reference time period, and/or wherein the corresponding region temporal resolution for at least one region of steady-state temporal behavior differs from the corresponding region temporal resolution for at least one other region of steady-state temporal behavior.

15. Non-transitory computer-readable storage media including computer-executable instructions that, when executed on a controller of a hydrocarbon industrial infrastructure, direct the controller of the hydrocarbon industrial infrastructure to perform the method of any of claims 1-14.

## Patentansprüche

1. Verfahren zur Verarbeitung optischer Daten, die von einem verteilten Glasfasersensorsystem erzeugt werden, das sich ein in der Nähe einer industriellen Infrastruktur für Kohlenwasserstoffe erstreckendes Glasfaserkabel umfasst, wobei das Verfahren umfasst:
wiederholtes Zuführen eines optischen Eingangssignals an das Glasfaserkabel;
wiederholtes Empfangen eines optischen Ausgangssignals von dem Glasfaserkabel als Reaktion auf das wiederholte Zuführen, wobei das optische Ausgangssignal die optischen Daten enthält, die Informationen über eine lokale Umgebung des Glasfaserkabels als Funktion der Position entlang der Länge des Glasfaserkabels umfassen;
Erzeugen eines Ausgangsdatenstroms, der zumindest teilweise auf dem optischen Ausgangssignal basiert;
Downsampling des Ausgangsdatenstroms unter Verwendung eines vorbestimmten Dezimierungsalgorithmus, um einen dezimierten Ausgangsdatenstrom zu erzeugen;
Vergleichen des dezimierten Ausgangsdatenstroms mit referenzierten dezimierten Ausgangsdaten;
Erkennen eines anomalen Verhaltens durch Feststellen, dass sich eine Teilmenge der optischen Daten innerhalb des dezimierten Ausgangsdatenstroms von einer entsprechenden Teilmenge der optischen Daten innerhalb der referenzierten dezimierten Ausgangsdaten unterscheidet; und
Analysieren der Teilmenge der optischen Daten als Reaktion auf die Feststellung.

2. Verfahren nach Anspruch 1, wobei das Verfahren weiterhin das Erzeugen der referenzierten dezimierten Ausgangsdaten umfasst.

3. Verfahren nach Anspruch 2, wobei das Verfahren weiterhin das Erzeugen des vorbestimmten Dezimierungsalgorithmus umfasst, der zumindest teilweise auf den referenzierten dezimierten Ausgangsdaten basiert.

4. Verfahren nach einem der Ansprüche 2 bis 3, wobei das Erzeugen der referenzierten dezimierten Ausgangsdaten das wiederholte Bereitstellen, das wiederholte Empfangen und das Erzeugen des Ausgangsdatenstroms über einen Referenzzeitraum umfasst, um einen referenzierten Ausgangsdatenstrom zu erzeugen.

5. Verfahren nach Anspruch 4, wobei das Erzeugen der referenzierten dezimierten Ausgangsdaten ferner das Identifizieren einer Vielzahl von Bereichen mit stationärem räumlichem Verhalten innerhalb des referenzierten Ausgangsdatenstrom umfasst.

6. Verfahren nach Anspruch 5, wobei jeder Bereich des stationären räumlichen Verhaltens der mehreren Bereiche des stationären räumlichen Verhaltens entlang eines entsprechenden Bruchteils der Länge des Glasfaserkabels definiert ist.

7. Verfahren nach Anspruch 6, wobei das Erzeugen der referenzierten dezimierten Ausgangsdaten für jeden Bereich mit stationärem räumlichem Verhalten weiterhin umfasst:
(i) Bestimmen einer entsprechenden räumlichen Auflösung des Bereichs, die ausreicht, um Schwankungen innerhalb einer Teilmenge des optischen Ausgangssignals aufzulösen, das durch den entsprechenden Bruchteil der Länge des Glasfaserkabels erzeugt wird; und
(ii) Downsampling einer entsprechenden Teilmenge des referenzierten Ausgangsdatenstroms auf die räumliche Auflösung des entsprechenden Bereichs.

8. Verfahren nach Anspruch 7, wobei die räumliche Auflösung des entsprechenden Bereichs ausreicht, um räumliche Schwankungen innerhalb des optischen Ausgangssignals aufzulösen, das durch den entsprechenden Abschnitt der Länge des Glasfaserkabels erzeugt wird.

9. Verfahren nach einem der Ansprüche 7 bis 8, wobei sich die räumliche Auflösung des entsprechenden Bereichs für mindestens einen Bereich mit stationärem räumlichem Verhalten von der räumlichen Auflösung des entsprechenden Bereichs für mindestens einen anderen Bereich mit stationärem räumlichem Verhalten unterscheidet.

10. Verfahren nach einem der Ansprüche 1 bis 9, wobei das Verfahren weiterhin das Erzeugen des vorbestimmten Dezimierungsalgorithmus umfasst, derart, dass eine Auflösung des dezimierten Ausgangsdatenstroms als Funktion der Position entlang der Länge des Glasfaserkabels einer Auflösung der referenzierten dezimierten Ausgangsdaten als Funktion der Position entlang der Länge des Glasfaserkabels entspricht.

11. Verfahren nach einem der Ansprüche 4 bis 10, wobei das Erzeugen der referenzierten dezimierten Ausgangsdaten ferner das Identifizieren einer Vielzahl von Bereichen mit stationärem zeitlichem Verhalten innerhalb des referenzierten Ausgangsdatenstroms umfasst.

12. Verfahren nach Anspruch 11, wobei jeder Bereich mit stationärem zeitlichem Verhalten aus der Vielzahl von Bereichen mit stationärem zeitlichem Verhalten während eines entsprechenden Bruchteils der Referenzzeitdauer definiert wird.

13. Verfahren nach Anspruch 12, wobei das Erzeugen der referenzierten dezimierten Ausgangsdaten für jeden Bereich des stationären zeitlichen Verhaltens weiterhin umfasst:
(i) Bestimmen einer entsprechenden zeitlichen Auflösung für den Bereich, die ausreicht, um Schwankungen innerhalb einer Teilmenge des optischen Ausgangssignals aufzulösen, die während des entsprechenden Bruchteils des Referenzzeitraums erzeugt wurde; und
(ii) Downsampling einer entsprechenden Teilmenge des referenzierten Ausgangsdatenstroms auf die zeitliche Auflösung des entsprechenden Bereichs.

14. Verfahren nach Anspruch 13, wobei die zeitliche Auflösung des entsprechenden Bereichs ausreicht, um zeitliche Schwankungen innerhalb des optischen Ausgangssignals während des referenzierten Zeitraums aufzulösen, und/oder wobei sich die zeitliche Auflösung des entsprechenden Bereichs für mindestens einen Bereich mit stationärem zeitlichem Verhalten von der zeitlichen Auflösung des entsprechenden Bereichs für mindestens einen anderen Bereich mit stationärem zeitlichem Verhalten unterscheidet.

15. Nichtflüchtige, computerlesbare Speichermedien, die computerausführbare Befehle enthalten, die, wenn sie auf einer Steuerung einer industriellen Kohlenwasserstoff-Infrastruktur ausgeführt werden, die Steuerung der industriellen Kohlenwasserstoff-Infrastruktur anweisen, das Verfahren gemäß einem der Ansprüche 1 bis 14 durchzuführen.

## Revendications

1. Procédé de traitement de données optiques générées par un système de détection répartie par fibre optique comportant un câble à fibre optique qui s'étend à proximité d'une infrastructure industrielle d'hydrocarbures, le procédé comprenant :
la fourniture répétée, au câble à fibre optique, d'un signal optique d'entrée ;
la réception répétée, en provenance du câble à fibre optique et en réponse à la fourniture répétée, d'un signal optique de sortie, le signal optique de sortie comportant les données optiques, lesquelles comportent des informations concernant un environnement local du câble à fibre optique en fonction d'une position sur une longueur du câble à fibre optique ;
la génération d'un flux de données de sortie qui est basé, au moins en partie, sur le signal optique de sortie ;
le sous-échantillonnage du flux de données de sortie au moyen d'un algorithme de décimation prédéterminé afin de générer un flux de données de sortie décimé ;
la comparaison du flux de données de sortie décimé à des données de sortie décimées de référence ;
la détection d'un comportement anormal par la détermination qu'un sous-ensemble des données optiques au sein du flux de données de sortie décimé diffère d'un sous-ensemble correspondant des données optiques au sein des données de sortie décimées de référence ; et
en réponse à la détermination, l'analyse du sous-ensemble des données optiques.

2. Procédé selon la revendication 1, le procédé comportant en outre la génération des données de sortie décimées de référence.

3. Procédé selon la revendication 2, le procédé comportant en outre la génération de l'algorithme de décimation prédéterminé sur la base, au moins en partie, des données de sortie décimées de référence.

4. Procédé selon l'une quelconque des revendications 2 à 3, dans lequel la génération des données de sortie décimées de référence comporte la réalisation de la fourniture répétée, de la réception répétée et de la génération du flux de données de sortie pendant une période de temps de référence afin de générer un flux de données de sortie de référence.

5. Procédé selon la revendication 4, dans lequel la génération des données de sortie décimées de référence comporte en outre l'identification, au sein du flux de données de sortie de référence, d'une pluralité de régions de comportement spatial en régime permanent.

6. Procédé selon la revendication 5, dans lequel chaque région de comportement spatial en régime permanent de la pluralité de régions de comportement spatial en régime permanent est définie sur une fraction correspondante de la longueur du câble à fibre optique.

7. Procédé selon la revendication 6, dans lequel la génération des données de sortie décimées de référence comporte en outre, pour chaque région de comportement spatial en régime permanent :
(i) la détermination d'une résolution spatiale de région correspondante suffisante pour résoudre une variation au sein d'un sous-ensemble du signal optique de sortie généré par la fraction correspondante de la longueur du câble à fibre optique ; et
(ii) le sous-échantillonnage d'un sous-ensemble correspondant du flux de données de sortie de référence jusqu'à la résolution spatiale de région correspondante.

8. Procédé selon la revendication 7, dans lequel la résolution spatiale de région correspondante est suffisante pour résoudre une variation spatiale au sein du signal optique de sortie généré par la fraction correspondante de la longueur du câble à fibre optique.

9. Procédé selon l'une quelconque des revendications 7 à 8, dans lequel la résolution spatiale de région correspondante pour au moins une région de comportement spatial en régime permanent diffère de la résolution spatiale de région correspondante pour au moins une autre région de comportement spatial en régime permanent.

10. Procédé selon l'une quelconque des revendications 1 à 9, le procédé comportant en outre la génération de l'algorithme de décimation prédéterminé de sorte qu'une résolution du flux de données de sortie décimé en fonction d'une position sur la longueur du câble à fibre optique corresponde à une résolution des données de sortie décimées de référence en fonction d'une position sur la longueur du câble à fibre optique.

11. Procédé selon l'une quelconque des revendications 4 à 10, dans lequel la génération des données de sortie décimées de référence comporte en outre l'identification, au sein du flux de données de sortie de référence, d'une pluralité de régions de comportement temporel en régime permanent.

12. Procédé selon la revendication 11, dans lequel chaque région de comportement temporel en régime permanent de la pluralité de régions de comportement temporel en régime permanent est définie pendant une fraction correspondante de la période de temps de référence.

13. Procédé selon la revendication 12, dans lequel la génération des données de sortie décimées de référence comporte en outre, pour chaque région de comportement temporel en régime permanent :
(i) la détermination d'une résolution temporelle de région correspondante suffisante pour résoudre une variation au sein d'un sous-ensemble du signal optique de sortie généré pendant la fraction correspondante de la période de temps de référence ; et
(ii) le sous-échantillonnage d'un sous-ensemble correspondant du flux de données de sortie de référence jusqu'à la résolution temporelle de région correspondante.

14. Procédé selon la revendication 13, dans lequel la résolution temporelle de région correspondante est suffisante pour résoudre une variation temporelle au sein du signal optique de sortie pendant la période de temps de référence, et/ou dans lequel la résolution temporelle de région correspondante pour au moins une région de comportement temporel en régime permanent diffère de la résolution temporelle de région correspondante pour au moins une autre région de comportement temporel en régime permanent.

15. Supports de stockage non transitoires lisibles par ordinateur comportant des instructions exécutables par ordinateur qui, lorsqu'elles sont exécutées sur un contrôleur d'une infrastructure industrielle d'hydrocarbures, amènent le contrôleur de l'infrastructure industrielle d'hydrocarbures à réaliser le procédé selon l'une quelconque des revendications 1 à 14.
